# FASCICULE DE BREVET EUROPEEN

(11) **EP 2 660 148 B1**
(45) Date de publication et mention de la délivrance du brevet: **04.03.2015**
(21) Numéro de dépôt: 13165025.1
(22) Date de dépôt: 24.04.2013
(51) Int. Cl.: B64D 27/18, B64D 29/00, B64C 21/08

(54) **Porte de surpression pour aéronef**
Druckausgleichstür für Luftfahrzeuge
Overpressure door for aircraft

(30) Priorité: 02.05.2012 FR 1253994
(43) Date de publication de la demande: 06.11.2013
(73) Titulaire: Airbus Opérations SAS, 31060 Toulouse (FR)
(72) Inventeur: Sommerer, Yannick, 31700 Cornebarrieu (FR); Massol, Alexandre, 31270 Cugnaux (FR)
(74) Mandataire: Gevers France

(56) Documents cités:
- EP-A2- 1 327 581
- EP-A2- 2 208 669
- US-A- 3 372 892
- US-A- 5 826 794

## Description

La présente invention concerne une porte de surpression de type axial pour aéronef, ainsi qu'un compartiment d'aéronef et un aéronef pourvus d'une telle porte.

Plus particulièrement, la présente invention concerne une porte de surpression qui est installée sur un compartiment de l'aéronef partiellement ou totalement hermétique, soumis à des fuites d'air sous-pression. Les portes de surpression sont prévues au niveau de zones de l'aéronef ou de moteur de l'aéronef, pour lesquelles de l'air sous-pression peut être évacué hors d'un compartiment grâce à l'ouverture desdites portes de surpression. Une telle porte de surpression comporte, notamment, une trappe qui est susceptible de pivoter autour d'un axe, entre une position fermée et une position ouverte. De façon usuelle, la trappe (initialement fermée) s'ouvre lorsque la pression différentielle entre ses faces interne et externe dépasse un seuil donné.

La présente invention a pour objet d'améliorer l'efficacité aérodynamique d'une telle porte de surpression.

On sait que les portes de surpression installées sur des zones d'un aéronef, en particulier d'un avion de transport, qui sont soumises à des fuites d'air sous-pression, peuvent être classées en deux grandes catégories. Ces catégories dépendent de l'orientation de la charnière de la trappe par rapport à l'écoulement extérieur généré par le déplacement relatif de l'aéronef dans l'air. Une première catégorie concerne les portes, pour lesquelles l'axe de rotation de la trappe est disposé sensiblement perpendiculairement à l'écoulement extérieur. Ces portes sont dites « transverses ». La deuxième catégorie de portes de surpression, dites « axiales », concerne les portes pour lesquelles l'axe de rotation est sensiblement aligné avec l'écoulement extérieur.

La pression à l'intérieur de la zone après ouverture de la porte de surpression dépend de la perte de charge de cette dernière. La pression intérieure du compartiment lors de la dynamique d'ouverture ou après ouverture totale de la porte de surpression est souvent le cas dimensionnant des capots constituants ces zones. Un des effets d'une amélioration de l'efficacité aérodynamique de la porte de surpression concerne donc la réduction du poids des capots, ce qui est très important dans le cas d'un aéronef.

Les performances aérodynamiques des deux catégories précitées de porte de surpression dépendent essentiellement du rapport entre la quantité de mouvement du jet crée par l'évacuation de l'air sous-pression dans le compartiment et celle de l'écoulement extérieur, c'est-à-dire du rapport ρ*U*/ρ*ₑₓₜUₑₓₜ* dans lequel ρ et *U* sont respectivement la densité et la vitesse de l'air s'écoulant à travers l'ouverture de la porte, et ρ*ₑₓₜ* et *Uₑₓₜ* sont respectivement la densité et la vitesse de l'air extérieur s'écoulant le long de la porte.

Pour un angle d'ouverture donné, les portes de type « transverse » présentent des pertes de charges faibles pour des rapports de quantité de mouvement ρ*U*/ρ*ₑₓₜUₑₓₜ* faibles ou relativement faibles, et des pertes de charges plus élevées pour des rapports de quantité de mouvement plus importants. Ces portes de surpression sont donc intéressantes pour des phases de vol à vitesse élevée avec des débits de fuite faibles. Cependant, les efforts aérodynamiques générés par l'écoulement externe limitent généralement l'angle d'ouverture de la porte « transverse », réduisant ainsi son intérêt à rapport de quantité de mouvement faible.

Les portes de type « axial » présentent, quant à elles, des pertes de charges plus faibles que les portes de type « transverse » pour des rapports de quantité de mouvement ρ*U*/ρ*ₑₓₜUₑₓₜ* importants, et des pertes de charges plus élevées que les portes de type « transverse » pour des rapports de quantité de mouvement plus faibles. Ces portes de surpression sont donc intéressantes pour des phases de vol à vitesse réduite avec des débits de fuite importants. Un des inconvénients de ces portes « axiales » concerne leur faible stabilité en position ouverte. Il est généralement nécessaire d'ajouter un dispositif empêchant le battement de la porte.

Les performances antagonistes de ces deux catégories de portes de surpression ne permettent pas d'obtenir une porte de surpression qui soit performante pour toutes les conditions de fonctionnement. De plus, une porte de type « transverse » crée une obstruction à l'écoulement externe qui génère un phénomène d'aspiration. Ce phénomène d'aspiration devient significatif lorsque la quantité de mouvement de l'écoulement extérieur est importante par rapport à la quantité de mouvement de la fuite s'écoulant à travers l'ouverture de la porte.

Par ailleurs, on connaît ;
- par le document EP-2 208 669, un système d'aéronef destiné au contrôle d'un flux laminaire et comprenant une première porte pivotante et un seconde porte montée pivotante par rapport à la première porte, chacune desdites portes pouvant prendre une position ouverte et une position fermée ; et
- par le document US-3 372 892, un système rétractable de roues de roulage, notamment pour un aéronef.

L'invention a pour objet d'améliorer l'efficacité aérodynamique des portes de surpression installées sur des zones d'un aéronef, notamment au niveau d'un moteur, afin de réduire la pression d'air à l'intérieur de ces zones, et ainsi d'optimiser le dimensionnement structurel des pièces de ces zones.

La présente invention concerne une porte de surpression pour aéronef, de type axial, comportant une trappe qui comprend une face interne et une face externe et qui est susceptible de pivoter autour d'un axe, entre une position fermée et une position ouverte.

A cet effet, selon l'invention, ladite porte de surpression de type axial est remarquable en ce qu'elle comporte, au niveau d'un bord amont (par rapport au sens d'un écoulement extérieur dans la direction définie par ledit axe), un appendice aérodynamique qui est solidaire de la face interne de la trappe au niveau dudit bord amont et qui est agencé sensiblement transversalement à cette dernière de manière :
- à être escamoté dans la position fermée de la trappe, par rapport à l'extérieur ; et
- à réaliser une déflexion de l'écoulement extérieur dans la position ouverte de la trappe.

Ainsi, grâce à l'invention, et comme précisé ci-dessous, on obtient une porte de surpression qui combine les avantages des deux catégories précitées de porte de surpression. En effet :
- d'une part, ladite porte de surpression de type axial permet d'obtenir les avantages d'une porte axiale usuelle, et est donc avantageuse pour des phases de vol à vitesse réduite de l'aéronef avec des débits de fuite importants ; et
- d'autre part, ledit appendice aérodynamique permet de réaliser une déflexion de l'écoulement extérieur dans la position ouverte de la trappe et ainsi d'autoriser le phénomène d'obstruction de l'écoulement externe caractéristique d'une porte de type transverse et donc d'obtenir les avantages d'une telle porte transverse usuelle, de sorte que la porte de surpression conforme à l'invention est ainsi avantageuse pour des phases de vol à vitesse élevée (de l'aéronef) avec des débits de fuite faibles.

De plus, l'appendice aérodynamique peut être optimisé de sorte que les efforts aérodynamiques résultants :
- augmentent la vitesse d'ouverture de la porte, afin de réduire le niveau de pression maximal à l'intérieur du compartiment ; et
- jouent un rôle stabilisateur lorsque la porte est en position ouverte, afin d'assurer que celle-ci ne batte pas.

De plus, contrairement à une porte « transverse » pour laquelle l'obstruction de l'écoulement externe est limitée par la résultante des efforts aérodynamiques sur la porte, l'appendice permet d'assurer l'obstruction d'écoulement externe cherchée quel que soit le rapport des quantités de mouvement.

La présente invention permet donc d'améliorer l'efficacité aérodynamique d'une porte de surpression qui est installée au niveau d'une zone d'un aéronef, notamment sur un moteur, en permettant de réduire la pression d'air à l'intérieur de cette zone et ainsi d'optimiser le dimensionnement structurel des pièces de cette zone. Plus particulièrement, l'invention permet ainsi, notamment, de réduire la masse du capot constituant la zone considérée.

De préférence, ledit appendice aérodynamique est fixé perpendiculairement à la face interne de la trappe. Toutefois, il peut également être fixé en présentant un angle différent d'un angle droit. En outre, avantageusement mais non exclusivement, il présente une surface plane.

L'efficacité de cet appendice dépend de sa forme. En effet, plus la surface obstruée est importante dans la position ouverte de la trappe et, par conséquent la déflexion de l'écoulement extérieur est importante, plus la perte de charge de la porte est réduite. La forme optimale de cet appendice dépend de la cinématique d'ouverture de la porte. Ainsi, pour une ouverture de la porte en rotation autour d'un axe, une forme curviligne (avec un bord libre défini selon un arc de cercle) permet d'obtenir la surface obstruée maximale tout en autorisant l'ouverture de la trappe.

Par ailleurs, la présente invention concerne également :
- un compartiment pour aéronef, pourvu d'au moins une porte de surpression telle que précitée, à travers laquelle de l'air sous pression peut être évacué hors dudit compartiment lorsqu'elle est ouverte ; et
- un moteur pour aéronef, pourvu également d'au moins une telle porte de surpression.

La présente invention concerne en outre un aéronef, notamment un avion de transport, qui est équipé au moins :
- d'une porte de surpression ; et/ou
- d'un compartiment ; et/ou
- d'un moteur,
tels que ceux précités.

Les figures du dessin annexé feront bien comprendre comment l'invention peut être réalisée. Sur ces figures, des références identiques désignent des éléments semblables.

La figure 1 montre schématiquement une porte de surpression conforme à l'invention, dans une position ouverte.

La figure 2 montre schématiquement la porte de surpression de la figure 1, dans une position fermée, en vue de dessous.

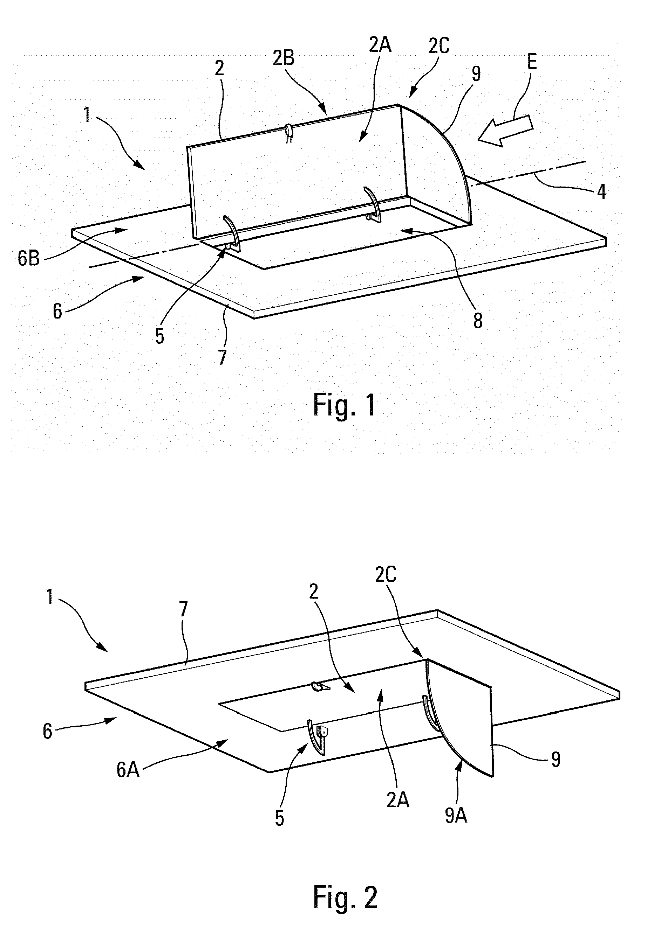

La présente invention concerne une porte de surpression 1 pour aéronef, de type axial, telle que représentée schématiquement sur les figures 1 et 2. Cette porte de surpression 1 comporte une trappe 2 qui comprend une face interne 2A et une face externe 2B et qui est susceptible de pivoter autour d'un axe de rotation 4, par l'intermédiaire de charnières usuelles 5, par rapport à un compartiment 6 dont on a uniquement représenté une partie 7 de la paroi externe. Ladite trappe 2 peut pivoter entre une position fermée (représentée sur la figure 2) et une position ouverte (représentée sur la figure 1). Ladite porte de surpression 1 étant de type axial, l'axe de rotation 4 est aligné, à une marge près, avec l'écoulement extérieur généré par le déplacement relatif de l'aéronef dans l'air lors d'un vol. Ledit écoulement extérieur est illustré par une flèche E sur la figure 1. Les directions de l'écoulement E et de l'axe de rotation 4 sont donc sensiblement parallèles.

Cette porte de surpression 1 est donc installée sur un compartiment 6 de l'aéronef ou d'un moteur de l'aéronef partiellement ou totalement hermétique, soumis à des fuites d'air sous-pression, dont l'intérieur est localisé par une flèche 6A et l'extérieur par une flèche 6B.

Ladite porte de surpression 1 comporte également des moyens usuels (non représentés spécifiquement) qui permettent l'ouverture de la trappe 2 lorsque la différence de pression entre l'intérieur 6A et l'extérieur 6B dépasse une valeur prédéterminée. Ces moyens sont connus et ne sont pas précisés davantage dans la présente description.

Lors de l'apparition d'une fuite d'air sous pression dans la zone de l'aéronef sur laquelle est installée la porte 1, la pression d'air à l'intérieur 6A de la zone augmente du fait de l'injection d'air. Lorsque la pression intérieure atteint par rapport à la pression externe un seuil donné, la trappe 2 de la porte 1 (initialement fermée) pivote libérant ainsi l'ouverture 8 réalisée sur le capot 7 de la zone en question. L'air de fuite peut alors s'échapper par l'ouverture 8 ainsi générée. L'augmentation de pression dans la zone en question est donc réduite, et par conséquent les efforts aérodynamiques exercés sur les pièces constituants cette zone sont également réduits.

Selon l'invention, afin d'améliorer son efficacité aérodynamique, ladite porte de surpression 1 comporte, au niveau du bord amont 2C par rapport au sens de l'écoulement extérieur E dans la direction définie par ledit axe 4, un appendice aérodynamique 9 qui est solidaire de la face interne 2A de la trappe 2 au niveau dudit bord amont 2C et qui est fixé transversalement à cette dernière de manière :
- à être escamoté (par rapport à l'extérieur 6B) dans la position fermée de la trappe, comme représenté sur la figure 2 ; et
- à être situé dans l'écoulement extérieur E, dans la position ouverte de la trappe 2, comme représenté sur la figure 1, de manière à réaliser une déflexion de l'écoulement extérieur.

Ainsi, grâce à l'invention, on obtient une porte de surpression 1 qui combine les avantages des deux catégories de porte de surpression. En effet :
- d'une part, ladite porte de surpression 1 de type axial permet d'obtenir les avantages d'une porte « axiale » usuelle, et est donc avantageuse pour des phases de vol à vitesse réduite de l'aéronef avec un débit de fuite important ; et
- d'autre part, ledit appendice aérodynamique 9 permet de réaliser une déflexion de l'écoulement extérieur E dans la position ouverte de la trappe 2 et ainsi de permettre le phénomène d'obstruction de l'écoulement externe caractéristique d'une porte « transverse » et donc d'obtenir les avantages d'une telle porte transverse usuelle, de sorte que la porte de surpression 1 est alors avantageuse pour des phases de vol à vitesse élevée de l'aéronef avec un débit de fuite faible.

Les performances aérodynamiques des deux catégories précitées de porte de surpression dépendent essentiellement du rapport entre la quantité de mouvement du jet crée par l'évacuation de l'air sous-pression dans le compartiment et celle de l'écoulement extérieur, c'est-à-dire du rapport ρ*U*/ρ*ₑₓₜUₑₓₜ* dans lequel p et *U* sont respectivement la densité et la vitesse de l'air s'écoulant à travers l'ouverture de la porte, et ρ*ₑₓₜ* et *Uₑₓₜ* sont respectivement la densité et la vitesse de l'air extérieur s'écoulant le long de la porte.

Ainsi :
- une porte axiale présente des pertes de charges plus faibles qu'une porte transverse pour des rapports de quantité de mouvement ρ*U*/ρ*ₑₓₜUₑₓₜ* importants, et des pertes de charges plus élevées pour des rapports de quantité de mouvement plus faibles. Une telle porte axiale est donc intéressante pour des phases de vol à vitesse réduite avec des débits de fuite importants, comme indiqué ci-dessus ;
- une porte transverse présente des pertes de charges faibles pour des rapports de quantité de mouvement ρ*U*/ρ*ₑₓₜUₑₓₜ* faibles ou relativement faibles, et des pertes de charges plus élevées pour des rapports de quantité de mouvement plus importants. Une telle porte transverse est donc intéressante pour des phases de vol à vitesse élevée avec un débit de fuite faible, comme indiqué ci-dessus ; et
- la porte de surpression 1 conforme à l'invention permet de combiner les caractéristiques les plus performantes de ces deux catégories de porte.

On obtient ainsi une porte de surpression 1 qui est performante pour toutes les conditions de fonctionnement. De plus, on est en mesure d'exploiter le phénomène d'aspiration et donc d'avoir des performances aérodynamiques élevées.

L'appendice 9 permet d'améliorer significativement l'efficacité de la porte axiale pour des rapports de débits faibles. L'augmentation de l'efficacité de la porte pour des débits de fuites plus élevé est plus modérée. L'appendice 9 permet en outre, s'il est optimisé à ces fins :
- de stabiliser la porte en position ouverte ; et
- d'augmenter la vitesse d'ouverture de la porte réduisant ainsi la pression maximale à l'intérieur du compartiment.

Ledit appendice aérodynamique 9 est fixé par tout moyen usuel sur la face interne 2A de la trappe 2. De préférence, il est fixé perpendiculairement à ladite face interne 2A. Toutefois, il peut également être fixé en présentant un angle différent d'un angle droit.

Ainsi, dans un mode de réalisation particulier de l'invention, l'appendice aérodynamique 9 est incliné (c'est-à-dire non perpendiculaire) par rapport à la face interne 2A de la trappe 2 (avec par exemple un angle de 80° entre la trappe 2 et l'appendice 9). L'avantage de ce mode de réalisation est que l'effort aérodynamique subi par l'appendice 9 (sous l'action de l'écoulement extérieur E) fournit également une composante (perpendiculaire à la trappe 2) qui permet d'augmenter la vitesse d'ouverture de la trappe 2 et qui assure la stabilité de la trappe 2 en position ouverte.

Ainsi, dans ce cas :
- ledit appendice aérodynamique 9 est agencé de manière à assurer la stabilité de la porte 1 en position ouverte, en exerçant un effort aérodynamique non parallèle à l'axe de rotation 4 de la porte 1 ; et
- ledit appendice aérodynamique 9 est agencé de manière à augmenter la vitesse d'ouverture de la porte, en exerçant un effort aérodynamique dont une composante est de même signe que le sens d'ouverture de la porte.

En outre, il présente, de préférence mais non exclusivement, une surface plane, comme représenté sur les figures 1 et 2. Cet appendice 9 est définie, de préférence de façon empirique, de manière à optimiser la porte de surpression 1 en fonction d'un critère ou de plusieurs critères combinés, et notamment d'au moins l'un des critères suivants : la stabilité aérodynamique de la porte en position ouverte, l'efficacité aérodynamique, l'accélération de la dynamique d'ouverture de la porte, la masse, et un effet aérodynamique extérieur.

L'efficacité de l'appendice 9 dépend de sa forme. En effet, plus la surface obstruée est importante et par conséquent la déflexion de l'écoulement est importante, plus la perte de charge de la porte 1 est réduite.

Ainsi, pour une ouverture de la trappe 2 en rotation autour d'un axe 4, telle que considérée dans la présente invention, une forme curviligne (avec un bord libre défini selon un arc de cercle 9A) permet d'obtenir la surface obstruée maximale tout en autorisant l'ouverture de la trappe 2.

Bien entendu, d'autres formes sont possibles pour l'appendice aérodynamique 9 et notamment une forme triangulaire.

La présente invention prévoit donc l'ajout d'un appendice aérodynamique 9 sur une porte « axiale » 1, dans le but d'associer les avantages des deux catégories de portes de surpression (« axiale » et « transverses ») et ainsi d'obtenir des performances aérodynamiques élevées, quelles que soient les conditions de fonctionnement.

Elle permet ainsi d'améliorer l'efficacité aérodynamique d'une porte de surpression 1 qui est installée sur une zone d'un aéronef, notamment au niveau d'un moteur, en permettant de réduire la pression d'air à l'intérieur de cette zone et ainsi d'optimiser le dimensionnement structurel des pièces de cette zone. Plus particulièrement, l'invention permet ainsi notamment de réduire la masse du capot constituant la zone considérée.

On notera que, pour une turbomachine d'un aéronef, de telles portes de surpression 1 peuvent notamment être installées :
- au niveau de compartiments, et en particulier du compartiment de la soufflante ;
- au niveau de la nacelle ; et
- au niveau du mât réacteur.

## Revendications

1. Aéronef pourvu d'au moins une porte de surpression, de type axial, comportant une trappe (2) qui comprend une face interne (2A) et une face externe (2B) et qui est susceptible de pivoter autour d'un axe (4), entre une position fermée et une position ouverte,
**caractérisé en ce que** ladite porte de surpression (1) comporte, au niveau d'un bord amont (2C) par rapport au sens d'un écoulement extérieur (E) dans la direction définie par ledit axe (4), un appendice aérodynamique (9) qui est solidaire de la face interne (2A) de la trappe (2) au niveau dudit bord amont (2C) et qui est agencé transversalement à cette dernière de manière :
- à être escamoté dans la position fermée de la trappe (2), par rapport à l'extérieur (6B) ; et
- à réaliser une déflexion de l'écoulement extérieur (E) dans la position ouverte de la trappe (2).

2. Aéronef selon la revendication 1,
**caractérisé en ce que** ledit appendice aérodynamique (9) est fixé perpendiculairement à la face interne (2A) de la trappe (2).

3. Aéronef selon la revendication 1,
**caractérisé en ce que** ledit appendice aérodynamique (9) est incliné par rapport à la face interne (2A) de la trappe (2).

4. Aéronef selon l'une quelconque des revendications précédentes, **caractérisé en ce que** ledit appendice aérodynamique (9) présente une surface plane.

5. Aéronef selon l'une quelconque des revendications précédentes, **caractérisé en ce que** ledit appendice aérodynamique (9) présente une forme adaptée à la cinétique d'ouverture de la trappe (2).

6. Aéronef selon l'une quelconque des revendications précédentes, **caractérisé en ce que** ledit appendice aérodynamique (9) présente un bord libre (9A) défini selon un arc de cercle.

7. Aéronef selon l'une quelconque des revendications 1 à 6, **caractérisé en ce que** ladite porte de surpression (1) fait partie d'un compartiment de l'aéronef, pourvu d'au moins une porte de surpression, à travers laquelle de l'air sous pression peut être évacuée hors dudit compartiment lorsqu'elle est ouverte.

8. Aéronef selon l'une quelconque des revendications 1 à 6, **caractérisé en ce que** ladite porte de surpression (1) fait partie d'un moteur de l'aéronef pourvu au moins d'une porte de surpression.

## Patentansprüche

1. Luftfahrzeug, welches mit mindestens einer Überdrucktür vom axialen Typ versehen ist, die eine Klappe (2) aufweist, welche eine Innenfläche (2A) und eine Außenfläche (2B) aufweist und welche um eine Achse (4) zwischen einer geschlossenen Position und einer geöffneten Position schwenkbar ist,
**dadurch gekennzeichnet, dass** die Überdrucktür (1) an einem bezüglich der Richtung einer äußeren Strömung (E) in der durch die Achse (4) definierten Richtung stromaufwärtigen Rand (2C) einen aerodynamischen Fortsatz (9) aufweist, welcher mit der Innenfläche (2A) der Klappe (2) an dem stromaufwärtigen Rand (2C) fest verbunden ist und welcher quer zu dieser Letzteren derart angeordnet ist:
- dass er in der geschlossenen Position der Klappe (2) in Bezug auf die Außenseite (6B) versenkt ist; und
- dass er in der geöffneten Position der Klappe (2) eine Ablenkung der äußeren Strömung (E) bewirkt.

2. Luftfahrzeug nach Anspruch 1, **dadurch gekennzeichnet, dass** der aerodynamische Fortsatz (9) senkrecht zu der Innenfläche (2A) der Klappe (2) befestigt ist.

3. Luftfahrzeug nach Anspruch 1, **dadurch gekennzeichnet, dass** der aerodynamische Fortsatz (9) bezüglich der Innenfläche (2A) der Klappe (2) geneigt ist.

4. Luftfahrzeug nach einem der vorhergehenden Ansprüche, **dadurch gekennzeichnet, dass** der aerodynamische Fortsatz (9) eine ebene Oberfläche aufweist.

5. Luftfahrzeug nach einem der vorhergehenden Ansprüche, **dadurch gekennzeichnet, dass** der aerodynamische Fortsatz (9) eine Form aufweist, die an die Kinetik des Öffnens der Klappe (2) angepasst ist.

6. Luftfahrzeug nach einem der vorhergehenden Ansprüche, **dadurch gekennzeichnet, dass** der aerodynamische Fortsatz (9) einen freien Rand (9A) aufweist, der kreisbogenförmig definiert ist.

7. Luftfahrzeug nach einem der Ansprüche 1 bis 6, **dadurch gekennzeichnet, dass** die Überdrucktür (1) Teil eines Abteils des Luftfahrzeugs ist, das mit mindestens einer Überdrucktür versehen ist, durch die hindurch, wenn sie geöffnet ist, Druckluft aus dem Abteil abgelassen werden kann.

8. Luftfahrzeug nach einem der Ansprüche 1 bis 6, **dadurch gekennzeichnet, dass** die Überdrucktür (1) Teil eines Motors des Luftfahrzeugs ist, der mit mindestens einer Überdrucktür versehen ist.

## Claims

1. An aircraft provided with at least one overpressure door, of axial type, including a hatch (2) which comprises an internal face (2A) and an external face (2B) and which can pivot about an axis (4), between a closed position and an open position,
**characterized in that** said overpressure door (1) includes, at an upstream edge (2C) relative to the direction of an external flow (E) in the direction defined by said axis (4), an aerodynamic appendage (9) which is securely attached to the internal face (2A) of the hatch (2) at said upstream edge (2C) and which is arranged transversely thereto so as:
- to be retracted in the closed position of the hatch (2), relative to the outside (6B); and
- to produce a deflection of the external flow (E) in the open position of the hatch (2).

2. The aircraft as claimed in claim 1,
**characterized in that** said aerodynamic appendage (9) is fastened at right angles to the internal face (2A) of the hatch (2).

3. The aircraft as claimed in claim 1,
**characterized in that** said aerodynamic appendage (9) is inclined relative to the internal face (2A) of the hatch (2).

4. The aircraft as claimed in any one of the preceding claims, **characterized in that** said aerodynamic appendage (9) has a planar surface.

5. The aircraft as claimed in any one of the preceding claims, **characterized in that** said aerodynamic appendage (9) has a shape adapted to the opening kinetics of the hatch (2).

6. The aircraft as claimed in any one of the preceding claims, **characterized in that** said aerodynamic appendage (9) has a free edge (9A) defined according to a circular arc.

7. The aircraft as claimed in any one of claims 1 to 6,
**characterized in that** said overpressure door (1) forms part of a compartment of the aircraft, provided with at least one overpressure door, through which the air under pressure can be evacuated from said compartment when it is open.

8. The aircraft as claimed in any one of claims 1 to 6,
**characterized in that** said overpressure door (1) forms part of an engine of the aircraft provided with at least one overpressure door.
